# EUROPÄISCHE PATENTSCHRIFT

(11) **EP 2 018 570 B1**
(45) Veröffentlichungstag und Bekanntmachung des Hinweises auf die Patenterteilung: **17.03.2010**
(21) Anmeldenummer: 07728475.0
(22) Anmeldetag: 25.04.2007
(51) Int. Cl.: G01P 3/00

(54) **ERMITTLUNG DER DREHZAHL EINER GETRIEBEWELLE**
DETERMINATION OF THE ROTATIONAL SPEED OF A TRANSMISSION SHAFT
DÉTERMINATION DE LA VITESSE DE ROTATION D'UN ARBRE DE BOÎTE DE VITESSES

(30) Priorität: 19.05.2006 DE 102006023554
(43) Veröffentlichungstag der Anmeldung: 28.01.2009
(73) Patentinhaber: ZF Friedrichshafen AG, 88038 Friedrichshafen (DE)
(72) Erfinder: FÜHRER, Kim, 88131 Lindau (DE)
(86) Internationale Anmeldenummer: PCT/EP2007/054019
(87) Internationale Veröffentlichungsnummer: WO 2007/134935

(56) Entgegenhaltungen:
- DE-A1- 10 223 625
- DE-A1- 10 347 494
- DE-A1- 19 814 758
- US-A- 4 817 470

## Beschreibung

Die vorliegende Erfindung betrifft eine Anordnung zur Ermittlung der Drehzahl einer Getriebewelle mit einer Getriebewelle, einem drehfest mit der Getriebewelle verbundenen Drehzahlgeber und einem feststehenden Drehzahlsensor, mit dessen Hilfe die Drehzahl an dem Drehzahlgeber abgegriffen werden kann. Ferner betrifft die vorliegende Erfindung ein Getriebe mit einer solchen Anordnung sowie ein Verfahren zur Ermittlung der Drehzahl einer Getriebewelle.

Aus dem Stand der Technik sind unterschiedliche Anordnungen zur Ermittlung der Drehzahl einer Getriebewelle bekannt. Diese auch als Drehzahlabgriffseinrichtungen bekannten Anordnungen zum Generieren eines Geschwindigkeitssignals für ein Kraftfahrzeug o. ä. umfassen im Wesentlichen einen drehfest mit der entsprechenden Getriebewelle verbundenen Signal- oder Drehzahlgeber, dem ein feststehender Drehzahlsensor zugeordnet ist, um die Drehzahl von dem Drehzahlgeber abzugreifen.

So beschreibt die DE 198 14 758 A1 allgemein eine Vorrichtung zum Erfassen der Drehzahl einer Welle. Die bekannte Vorrichtung weist einen mit der Welle drehfest verbundenen Signalgeber auf, der in der Art eines Zahnrades ausgebildet ist, wobei die Zähne des Zahnrades jeweils eine steile und eine flache Zahnflanke aufweisen. Des Weiteren ist ein analoger Hall-Effekt-Sensor vorgesehen, der die Drehzahl in radialer Richtung am Umfang des Zahnrades, also an den Zähnen, abgreift. Dank der unterschiedlichen Flankensteigungen der beiden Zahnflanken ist es möglich, die Drehzahl und Drehrichtung der Welle mit nur einem Sensor und bei konstanter Aktualisierungsrate zu ermitteln, selbst wenn die Welle mit einer sehr geringen Drehzahl rotiert.

Die DE 103 47 494 A1 beschreibt eine ähnliche Anordnung, bei der das Drehmoment an Getriebewellen ermittelt werden soll. Die bekannte Vorrichtung umfasst zu diesem Zweck eine Getriebewelle, an der ein Drehzahlgeberzahnrad drehfest angeordnet ist, wobei dem Drehzahlgeberzahnrad wiederum ein feststehender Drehzahlsensor zugeordnet ist. Die Zähne des Drehzahlgeberzahnrades erzeugen beim Vorbeidrehen an dem Drehzahlsensor elektrische Impulse, die einer entsprechenden Auswerteeinheit zugeleitet werden.

Der vorstehend genannte Stand der Technik hat sich in der Praxis bewährt, jedoch führen die zusätzlichen Signalgeber, Drehzahlgeber oder Drehzahlgeberzahnräder zum einen zu einer Vergrößerung der Gesamtlänge des Getriebes und zum anderen zu einer Gewichtszunahme, was bei bestimmten Anordnungen des Getriebes innerhalb des Kraftfahrzeuges nachteilig sein kann.

Demgegenüber schlägt die DE 102 23 625 A1 eine Drehzahlabgriffseinrichtung für ein Getriebe eines Kraftfahrzeuges vor, die ebenfalls einen Signalgeber und einen Sensor umfasst, wobei der Signalgeber in eine Staubschutzabdeckung für einen abtriebsseitigen Wellendichtring integriert ist. Die Staubschutzabdeckung ist außerhalb des Getriebegehäuses angeordnet und ist drehfest mit der Abtriebsseite des Getriebes verbunden, während der Sensor außen an dem Gehäuse befestigt ist. Diese Lösung ist insofern von Vorteil, als dass die vorhandene Staubschutzabdeckung gleichzeitig als Signalgeber fungiert, wodurch das Gewicht des Getriebes nicht durch ein zusätzliches Bauteil erhöht wird. Dennoch führt der außen liegende Sensor zu einer Vergrößerung des Getriebes, die den Einbau in ein Kraftfahrzeug o. ä. erschwert. Darüber hinaus ist es erforderlich, dass die Staubschutzabdeckung entsprechend modifiziert wird, um als Signalgeber fungieren zu können. So wird beispielsweise vorgeschlagen, äquidistante Erhöhungen am Umfang der Staubschutzabdeckung vorzusehen, die nicht nur die Größe des Getriebes weiter erhöhen, sondern auch zu einem erhöhten Herstellungsaufwand führen.

Der vorliegenden Erfindung liegt somit die Aufgabe zu Grunde, eine Anordnung zur Ermittlung der Drehzahl einer Getriebewelle zu schaffen, die die vorstehend genannten Nachteile überwindet. Darüber hinaus liegt der Erfindung die Aufgabe zu Grunde, ein Getriebe für ein Kraftfahrzeug mit einer solchen vorteilhaften Anordnung zu schaffen. Des Weiteren liegt der Erfindung die Aufgabe zu Grunde, ein verbessertes Verfahren zur Ermittlung der Drehzahl einer Getriebewelle anzugeben.

Die Lösung dieser Aufgabe erfolgt an Hand der in Patentanspruch 1, 15 bzw. 17 angegebenen Merkmale. Vorteilhafte Ausführungsformen der Erfindung sind Gegenstand der Unteransprüche.

Die erfindungsgemäße Anordnung zur Ermittlung der Drehzahl einer Getriebewelle weist eine Getriebewelle auf. Hierbei kann es sich beispielsweise um die Antriebswelle, eine Vorgelegewelle, die Hauptwelle oder die Abtriebswelle eines Getriebes handeln. Mit der Getriebewelle ist ein Drehzahlgeber drehfest verbunden. Es ist ferner ein feststehender Drehzahlsensor vorgesehen, mittels dessen die Drehzahl an dem Drehzahlgeber abgegriffen werden kann. Der Drehzahlgeber ist am Umfang der Schaltmuffe vorgesehen, was beispielsweise auch eine Integration des Drehzahlgebers in die Schaltmuffe umfassen kann. Die Schaltmuffe ist axial verschiebbar und drehfest an der Getriebewelle angeordnet und Teil einer Kopplungseinrichtung. Als Kopplungseinrichtung kommt beispielsweise eine Klauenkupplung in Frage, die u. a. die genannte Schaltmuffe umfasst. Darüber hinaus kann die Kopplungseinrichtung beispielsweise auch eine Synchronisierungseinrichtung beinhalten. Die Kopplungseinrichtung kann z. B. der Kopplung der Getriebewelle mit einem Loszahnrad an der Getriebewelle oder mit einer anderen Getriebewelle dienen.

Der Drehzahlgeber fußt somit auf der bereits vorhandenen Schaltmuffe der Kopplungseinrichtung, wodurch - ähnlich wie bei der aus der DE 102 23 625 A1 bekannten Drehzahlabgriffseinrichtung - ein bereits vorhandenes Getriebeteil teilweise als Drehzahlgeber fungiert. Insoweit ist kein vollständiges Drehzahlgeberzahnrad erforderlich, so dass einerseits eine Gewichtsreduzierung und andererseits eine Längenreduzierung des Getriebes erreicht wird. Gegenüber dem Stand der Technik nach der DE 102 23 625 A1 wird ferner der Vorteil erzielt, dass für die Anordnung des Drehzahlsensors derjenige Raum im Innern eines Getriebes genutzt werden kann, der ohnehin im Bereich des Umfangs der Schaltmuffe zur Verfügung steht. Auf diese Weise wird das Getriebe nicht vergrößert, wie dies bei dem außen an dem Getriebegehäuse angeordneten Sensor für die Staubschutzabdeckung der Fall ist. Darüber hinaus kann bei einem Getriebe mit der erfindungsgemäßen Anordnung auf eine Staubschutzabdeckung für die Wellendichtringe verzichtet werden, zumal diese für die Ermittlung der Drehzahl der Getriebewelle nicht benötigt wird.

In einer bevorzugten Ausführungsform der erfindungsgemäßen Anordnung ist der Drehzahlsensor derart ausgerichtet, dass die Drehzahl in radialer Richtung an dem Drehzahlgeber am Umfang der Schaltmuffe abgegriffen werden kann. Bei dem Drehzahlsensor kann es sich beispielsweise um einen Hall-Effekt-Sensor oder einen Induktionssensor handeln. Die Abgreifbarkeit in radialer Richtung, die beispielsweise durch eine seitliche, radiale Anordnung des Drehzahlsensors erreicht werden kann, ist insofern sinnvoll, als dass die Schaltmuffe in axialer Richtung verschoben werden kann, was bei einem Abgreifen in axialer Richtung zu einer Kollision der Schaltmuffe mit dem Drehzahlsensor führen würde.

In einer besonders bevorzugten Ausführungsform der erfindungsgemäßen Anordnung weist die Schaltmuffe eine Außenverzahnung auf, die mit einer Innenverzahnung eines anzukoppelnden Getriebeteiles in Eingriff gebracht werden kann. Das anzukoppelnde Getriebeteil kann beispielsweise ein Loszahnrad auf der Getriebewelle oder eine andere Getriebewelle sein. Der Drehzahlgeber wird bei dieser Ausführungsform von der Außenverzahnung der Schaltmuffe gebildet. Auf diese Weise kann die Außenverzahnung, die für die Kopplung mit einem anderen Getriebeteil notwendig ist, in unveränderter Form auch als Drehzahlgeber verwendet werden, d.h. eine spezielle Anpassung der Schaltmuffe, wie sie bei der bekannten Staubschutzabdeckung (DE 102 23 625 A1) notwendig ist, ist nicht erforderlich. Somit ist der Aufbau der Anordnung vereinfacht und der Fertigungsaufwand verringert.

In einer weiteren vorteilhaften Ausführungsform der erfindungsgemäßen Anordnung kann die Schaltmuffe von einer Neutralstellung in eine erste Kopplungsstellung verschoben werden, in der die Außenverzahnung mit der Innenverzahnung eines ersten anzukoppelnden Getriebeteiles, wie beispielsweise einem ersten Loszahnrad auf der Getriebewelle oder einer anderen Getriebewelle, im Eingriff ist.

Gemäß einer weiteren vorteilhaften Ausführungsform der erfindungsgemäßen Anordnung kann die Schaltmuffe ferner von der Neutralstellung in entgegengesetzter Richtung in eine zweite Kopplungsstellung verschoben werden, in der die Außenverzahnung mit der Innenverzahnung eines zweiten anzukoppelnden Getriebeteiles im Eingriff ist. Unter der entgegengesetzten Richtung ist hierbei diejenige Richtung zu verstehen, die der Richtung entgegengesetzt ist, in die die Schaltmuffe in die erste Kopplungsstellung verschoben wird.

Um zu gewährleisten, dass die Anordnung dauerhaft die Drehzahl der Getriebewelle ermitteln kann, ist der Drehzahlsensor in einer bevorzugten Ausführungsform der erfindungsgemäßen Anordnung derart angeordnet, dass die Drehzahl in der Neutralstellung, der ersten Kopplungsstellung und der zweiten Kopplungsstellung an der Außenverzahnung abgegriffen werden kann. So kann der Drehzahlsensor beispielsweise derart angeordnet sein, dass er die Drehzahl in der Neutralstellung der Schaltmuffe in einem mittleren Bereich der Außenverzahnung abgreift, während er die Drehzahl in den beiden Kopplungsstellungen jeweils in einem äußeren Bereich der Außenverzahnung abgreift. In jedem Fall ist gewährleistet, dass ein Abgreifen an der Außenverzahnung in allen vorbestimmten Stellungen stattfinden kann, in die die Schaltmuffe verschoben wird.

In einer weiteren vorteilhaften Ausführungsform der erfindungsgemäßen Anordnung ist eine Schaltgabel zum Verschieben der Schaltmuffe vorgesehen.

Um beim Einsatz einer Schaltgabel zu gewährleisten, dass einerseits ein sicheres Verschieben der Schaltmuffe und andererseits ein dauerhaftes Abgreifen der Drehzahl an der Außenverzahnung möglich ist, ist in einer bevorzugten Ausführungsform der erfindungsgemäßen Anordnung eine umlaufende Nut in der Schaltmuffe vorgesehen, in die die Schaltgabel eingreift. Die Außenverzahnung weist dabei zwei seitliche Außenverzahnungsabschnitte auf, zwischen denen sich die umlaufende Nut erstreckt. Die Drehzahl kann dann in der Neutralstellung und der ersten Kopplungsstellung der Schaltmuffe an dem einen Außenverzahnungsabschnitt abgegriffen werden, während die Drehzahl in der zweiten Kopplungsstellung der Schaltmuffe an dem anderen Außenverzahnungsabschnitt abgreifbar ist. Um dies zu erreichen, müssen die Dimensionierungen und Anordnungen des Drehzahlsensors, der Außenverzahnungsabschnitte und der umlaufenden Nut entsprechend aufeinander abgestimmt werden. So kann zwar die Drehzahl dann nicht abgelesen werden, wenn sich der Drehzahlsensor über der umlaufenden Nut befindet, jedoch ist in den vorbestimmten Neutral- und Kopplungsstellungen der Schaltmuffe sichergestellt, das die Drehzahl an den jeweiligen Außenverzahnungsabschnitten abgegriffen werden kann.

In einer weiteren vorteilhaften Ausführungsform der erfindungsgemäßen Anordnung ist der Drehzahlsensor endseitig an einem Sensorarm befestigt, der sich bis zu der Schaltmuffe bzw. dem Drehzahlgeber der Schaltmuffe erstreckt.

Um den Raum innerhalb eines Getriebegehäuses sinnvoll zu nutzen, ist der Sensorarm in einer weiteren vorteilhaften Ausführungsform der erfindungsgemäßen Anordnung an einem Getriebegehäuse befestigt und erstreckt sich durch den Stellerraum. Unter dem Stellerraum ist hierbei derjenige Raum innerhalb des Getriebegehäuses zu verstehen, in dem sich die Stellmittel der Getriebeschaltung befinden, wie beispielsweise die Schienen einer Schienenschaltung.

Gemäß einer weiteren bevorzugten Ausführungsform der erfindungsgemäßen Anordnung ist ein sensorseitiger Abschnitt des Sensorarmes, also derjenige Abschnitt des Sensorarmes, der den Drehzahlsensor aufnimmt, derart ausgebildet, dass sich dieser in der Neutralstellung, der ersten Kopplungsstellung und/oder der zweiten Kopplungsstellung kollisionsfrei in oder durch die Schaltgabelöffnung erstreckt. Unter der Schaltgabelöffnung ist hierbei diejenige Öffnung zu verstehen, die zwischen den beiden Streben der Schaltgabel und der umgriffenen Schaltmuffe verbleibt.

In einer weiteren bevorzugten Ausführungsform der erfindungsgemäßen Anordnung ist der sensorseitige Abschnitt des Sensorarmes der Schaltgabelöffnung gegenüberliegend und in Richtung der Schaltgabelöffnung versetzt angeordnet. Unter einer seitlichen Versetzung ist hierbei die seitliche Versetzung gegenüber einem befestigungsseitigen Abschnitt des Sensorarmes zu verstehen. Bei dieser Ausführungsform kann der sensorseitige Abschnitt bei einer Verschiebung der Schaltgabel in die Schaltgabelöffnung eintauchen, während die Schaltgabel mit dem befestigungsseitigen Abschnitt nicht kollidiert.

Um den von dem Sensorarm belegten Raum innerhalb eines Getriebegehäuses auch effektiv zu nutzen, ist an der Getriebewelle in einer weiteren vorteilhaften Ausführungsform der erfindungsgemäßen Anordnung ein Loszahnrad vorgesehen, das über die Kopplungseinrichtung mit der Getriebewelle gekoppelt werden kann, wobei an dem Sensorarm ferner ein Radsatzdrehzahlsensor vorgesehen ist, mittels dessen die Drehzahl des Loszahnrades an der Verzahnung desselben abgegriffen werden kann. Der Sensorarm dient somit der Aufnahme eines weiteren Messelementes, für das keine zusätzliche Halterung erforderlich ist.

In einer weiteren vorteilhaften Ausführungsform der erfindungsgemäßen Anordnung ist das anzukoppelnde Getriebeteil ein Loszahnrad auf der Getriebewelle oder ein Festzahnrad an einer anderen Getriebewelle. Im letztgenannten Fall kann es sich beispielsweise um die Antriebswelle des Getriebes handeln, wobei durch die Kopplung der so genannte Direktgang eingelegt würde.

Das erfindungsgemäße Getriebe für ein Kraftfahrzeug weist die erfindungsgemäße Anordnung zur Ermittlung der Drehzahl einer Getriebewelle auf.

In einer bevorzugten Ausführungsform des erfindungsgemäßen Getriebes ist die Getriebewelle die Hauptwelle des Getriebes, wobei ferner zwei Vorgelegewellen vorgesehen sind, zwischen denen die Hauptwelle schwimmend gelagert ist.

Das erfindungsgemäße Verfahren zur Ermittlung der Drehzahl einer Getriebewelle umfasst die Verfahrensschritte des Bereitstellens eines Getriebes mit einer Getriebewelle und einer Kopplungseinrichtung, die eine axial verschiebbare und drehfest mit der Getriebewelle verbundene Schaltmuffe aufweist, und des Abgreifens der Drehzahl an dem Umfang der Schaltmuffe. Vorzugsweise handelt es sich bei dem Getriebe um ein Getriebe der zuvor genannten Art.

Die Erfindung wird im Folgenden anhand einer beispielhaften Ausführungsform unter Bezugnahme auf die zugehörigen Zeichnungen näher erläutert.

Es zeigen:
- Fig. 1: eine schematische Darstellung eines Getriebes mit der er- findungsgemäßen Anordnung zur Ermittlung der Drehzahl einer Getriebewelle,
- Fig. 2: eine teilweise Seitenansicht der Anordnung von Fig. 1 mit der Schaltmuffe in der Neutralstellung,
- Fig. 3: eine Ansicht der Anordnung von Fig. 2 in Richtung des Pfeils A,
- Fig. 4: die Anordnung von Fig. 2 mit der Schaltmuffe in einer ers- ten Kopplungsstellung und
- Fig. 5: die Anordnung von Fig. 2 und 4 mit der Schaltmuffe in ei- ner zweiten Kopplungsstellung.

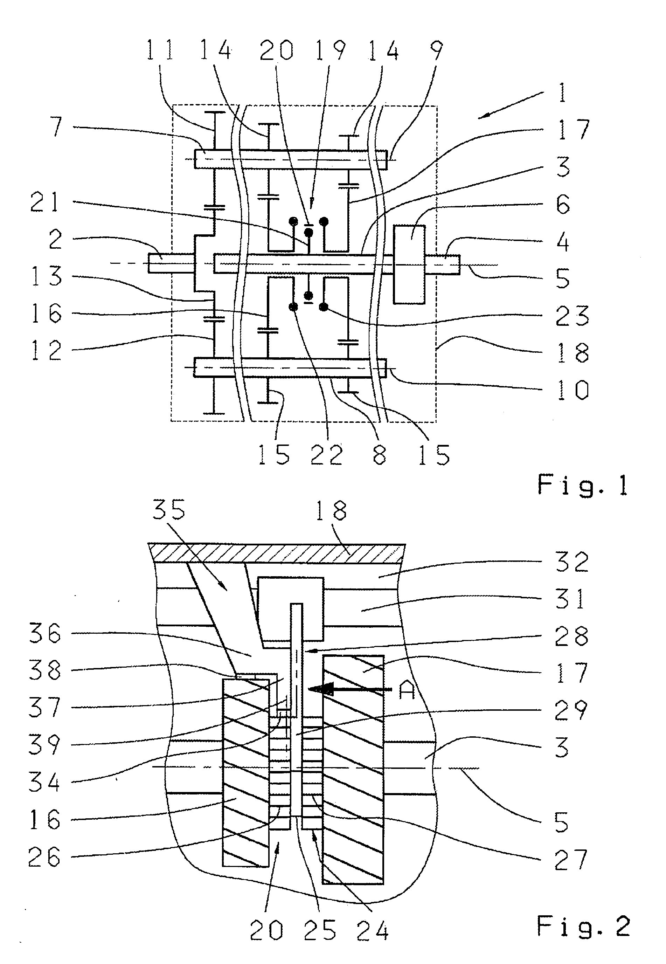

Fig. 1 zeigt eine schematische Darstellung eines Getriebes 1 für ein Kraftfahrzeug, wobei das Getriebe eine Anordnung zur Ermittlung der Drehzahl einer Getriebewelle aufweist. Das Getriebe 1 ist ein gleichachsiges Getriebe mit einer Antriebswelle 2, einer Hauptwelle 3 und einer Abtriebswelle 4, die hintereinander liegend auf einer Achse 5 angeordnet sind. Die Hauptwelle 3 ist mit der Abtriebswelle 4 über ein lediglich schematisch angedeutetes Planetenradgetriebe 6 verbunden. Es sind ferner zwei Vorgelegewellen 7, 8 vorgesehen, die sich parallel zu der Antriebswelle 2, der Hauptwelle 3 und der Abtriebswelle 4 entlang zweier Achsen 9, 10 erstrechen. An den Vorgelegewellen 7, 8 ist jeweils ein Antriebszahnrad 11, 12 befestigt, das mit einem Abtriebszahnrad 13 der Antriebswelle 2 im Eingriff ist, so dass die Vorgelegewellen 7, 8 durch die Antriebswelle 2 angetrieben werden können. Darüber hinaus sind an den Vorgelegewellen 7, 8 weitere Festzahnräder 14, 15 vorgesehen, die mit Loszahnrädern 16, 17 auf der Hauptwelle 3 im Eingriff stehen. Die Hauptwelle 3 ist schwimmend zwischen den beiden Vorgelegewellen 7, 8 und mit ausreichendem Spiel zwischen der Antriebswelle 2 und der Abtriebswelle 4 gelagert. Das Getriebe 1 weist ferner ein Getriebegehäuse 18 auf, durch das sich die der Hauptwelle 4 abgewandten Enden der Antriebs- und Abtriebswelle 2, 4 nach außen erstrecken.

Um eine drehfeste Verbindung bzw. eine Kopplung der Hauptwelle 3 mit einem der Loszahnräder 16, 17 erzeugen zu können, ist eine Kopplungseinrichtung 19 an der Hauptwelle 3 vorgesehen. Die Kopplungseinrichtung 19 weist eine Schaltmuffe 20 auf, die axial verschoben werden kann und über einen Muffenträger 21 drehfest an der Hauptwelle 3 angeordnet ist. In den der Schaltmuffe 20 zugewandten Seiten der Loszahnräder 16, 17 sind ferner Vertiefungen vorgesehen, in die die Schaltmuffe 20 verschoben werden kann, wobei innerhalb der Vertiefungen Innenverzahnungen 22, 23 vorgesehen sind, auf deren Funktion später eingegangen wird.

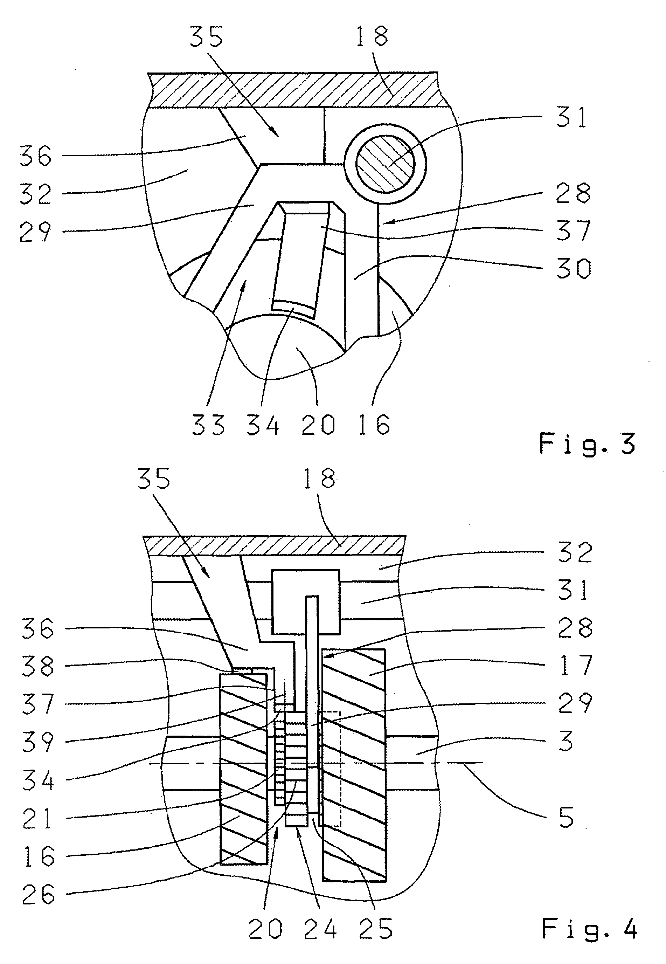

Der weitere Aufbau der Anordnung wird nachstehend unter Bezugnahme auf die Fig. 2 bis 5 beschrieben. Fig. 2 zeigt eine teilweise Seitenansicht der Anordnung. Die Schaltmuffe 20 weist eine Außenverzahnung 24 auf, die als Geradverzahnung ausgebildet ist. Ferner ist in der Schaltmuffe 20 eine mittlere umlaufende Nut 25 vorgesehen, die die Außenverzahnung 24 in zwei seitliche Außenverzahnungsabschnitte 26, 27 unterteilt. Um die Schaltmuffe 20 axial verschieben zu können, ist eine Schaltgabel 28 vorgesehen, die in Fig. 3 in einer Vorderansicht zu sehen ist. Die Schaltgabel 28 umfasst zwei Streben 29, 30, die einerseits seitlich in die umlaufende Nut 25 in der Schaltmuffe eingreifen und andererseits zusammengeführt sind, um gemeinsam an der Schiene 31 einer Schienenschaltung befestigt zu sein. Die Schiene 31 erstreckt sich parallel zu der Hauptwelle 3 durch einen Stellerraum 32 innerhalb des Getriebegehäuses 18, der sich oberhalb der Hauptwelle 3 und der Loszahnräder 16, 17 erstreckt. Die Schaltgabel 28 ist derart lang ausgebildet, dass zwischen den Streben 29, 30 und der angrenzenden Schaltmuffe 20 eine Schaltgabelöffnung 33 verbleibt, wie dies in Fig. 3 zu erkennen ist.

Die Anordnung umfasst ferner einen Drehzahlsensor 34, der feststehend in der Nähe des Umfangs der Schaltmuffe 20 angeordnet und der Außenverzahnung 24 der Schaltmuffe 20 zugewandt ist. Der Drehzahlsensor 34 ist dabei endseitig an einem Sensorarm 35 befestigt. Der Sensorarm 35 umfasst einen Befestigungsabschnitt 36, der an dem Getriebegehäuse 18 befestigt ist und sich durch den Stellerraum 32 erstreckt. Dabei verläuft der Befestigungsabschnitt 36 zunächst im Wesentlichen in radialer Richtung, um anschließend einen Verlauf anzunehmen, der im Wesentlichen parallel zu der Hauptwelle 3 ausgerichtet ist. An den Befestigungsabschnitt 36 schließt sich ein sensorseitiger Abschnitt 37 an, der sich wiederum in radialer Richtung bis zu der Schiebemuffe 20 erstreckt und an seinem Ende den Drehzahlsensor 34 aufnimmt. Aufgrund des Verlaufs des Befestigungsabschnittes 36 ist der sensorseitige Abschnitt 37, der der Schaltgabelöffnung 33 gegenüberliegt (Fig. 3), in Richtung der Schaltgabelöffnung 33 versetzt angeordnet.

An dem Sensorarm 35 ist ferner ein Radsatzdrehzahlsensor 38 angeordnet, der an dem parallel zur Hauptwelle 3 ausgerichteten Teil des Befestigungsabschnittes 36 befestigt, in der Nähe des Umfangs des Loszahnrades 16 angeordnet und der Verzahnung des Loszahnrades 16 zugewandt ist. Mit Hilfe dieses Radsatzdrehzahlsensors 38 kann zusätzlich die Drehzahl des Loszahnrades 16 an der Verzahnung desselben abgegriffen werden.

Die Anordnung weist ferner einen Drehzahlgeber auf, der am Umfang der Schaltmuffe 20 angeordnet ist. Der Drehzahlgeber wird von der dem Drehzahlserisor 34 zugewandten Außenverzahnung 24 bzw. den Außenverzahnungsabschnitten 26, 27 der Schaltmuffe 20 gebildet. Der Drehzahlsensor 34, bei dem es sich im vorliegenden Beispiel um einen Hall-Effekt-Sensor oder einen Induktionssensor handelt, greift die Drehzahl in radialer Richtung an der Außenverzahnung 24 ab. Dies bedeutet, dass die an dem Drehzahlsensor 34 vorbeidrehenden Zähne der Außenverzahnung 24 in dem Drehzahlsensor 34 Impulse erzeugen, die an eine nicht dargestellte Auswerteeinheit weitergegeben werden. Letztere kann aus der Anzahl der Impulse pro Zeit die Drehzahl der Hauptwelle 3 berechnen. Das Abgreifen der Drehzahl in radialer Richtung ist bei dem vorliegende Getriebe 1 insbesondere deshalb von Vorteil, weil bei diesem das Radialspiel der Hauptwelle 3 geringer als das Axialspiel derselben ist, so dass der Toleranzbereich des Drehzahlsensors 34, innerhalb dessen eine Drehzahlermittlung sicher durchführbar ist, größer als das Radialspiel ist.

Nachstehend werden weitere Merkmale der Ausführungsform der Anordnung sowie deren Funktionsweise unter Bezugnahme auf die Fig. 2 bis 5 beschrieben.

In Fig. 2 befindet sich die Schaltmuffe 20 in einer mittleren Neutralstellung, in der die Außenverzahnung 24 der Schaltmuffe 20 nicht im Eingriff mit einer der Innenverzahnungen 22, 23 der benachbarten Loszahnräder 16, 17 ist, d. h. keines der Loszahnräder 16, 17 ist drehfest mit der Hauptwelle 3 gekoppelt. Der Drehzahlsensor 34 kann die Drehzahl der Hauptwelle 3 an dem Außenverzahnungsabschnitt 26 abgreifen und zwar an einem der umlaufenden Nut 25 nahe gelegenen Bereich des Außenverzahnungsabschnittes 26. In der Neutralstellung ist der sensorseitige Abschnitt 37 des Sensorarmes zum Teil in die Schaltgabelöffnung 33 zwischen den Streben 29, 30 eingetaucht. Dank der seitlichen Versetzung des sensorseitigen Abschnitts 37 gegenüber dem Befestigungsabschnitt 36 kommt es zu keinerlei Kollision zwischen der Schaltgabel 28 und dem Sensorarm 25.

Die Schaltmuffe 20 kann nun mit Hilfe der Schienenschaltung und der Schaltgabel 28 von der Neutralstellung axial in eine erste Kopplungsstellung verschoben werden, die in Fig. 4 gezeigt ist. Hierdurch gelangt die Schaltmuffe 20 in die seitliche Vertiefung in dem Loszahnrad 17 und kommt mit der Innenverzahnung 23 des Loszahnrades 17 in Eingriff. Somit kann die Drehung der Antriebswelle 2 über die Vorgelegewelle 7, 8, die Festzahnräder 14, 15, das gekoppelte Loszahnrad 17 und die Kopplungseinrichtung 19 auf die Hauptwelle 3 übertragen werden. In der ersten Kopplungsstellung der Schaltmuffe 20 greift der Drehzahlsensor 34 die Drehzahl weiterhin an dem Außenverzahnungsabschnitt 26 ab, diesmal jedoch in einem Bereich des Außenverzahnungsabschnittes 26, der entfernt von der umlaufenden Nut 25 angeordnet ist, da die Schaltmuffe 20 in die erste Kopplungsstellung nach rechts verschoben ist. In der ersten Kopplungsstellung erstreckt sich der sensorseitige Abschnitt 37 des Sensorarmes 35 nicht mehr in die Schaltgabelöffnung 33.

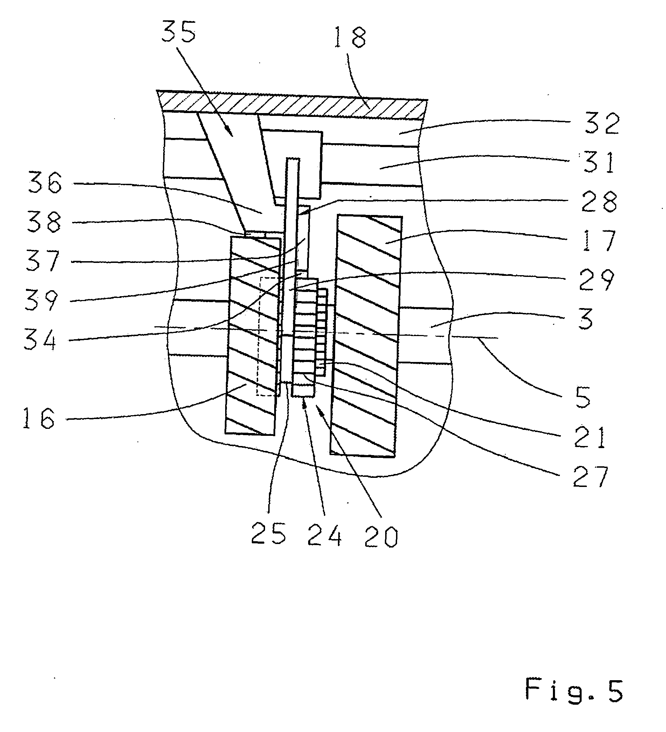

Darüber hinaus kann die Schaltmuffe 20 mit Hilfe der Schienenschaltung und der Schaltgabel 28 von der Neutralstellung (Fig. 2) axial in eine zweite Kopplungsstellung verschoben werden, die in Fig. 5 gezeigt ist. Hierdurch gelangt die Schaltmuffe 20 in die seitliche Vertiefung in dem Loszahnrad 16 und kommt mit der Innenverzahnung 22 des Loszahnrades 16 in Eingriff. Somit kann die Drehung der Antriebswelle 2 über die Vorgelegewellen 7, 8, die Festzahnräder 14, 15, das gekoppelte Loszahnrad 16 und die Kopplungseinrichtung 19 auf die Hauptwelle 3 übertragen werden. In der zweiten Kopplungsstellung der Schaltmuffe 20 greift der Drehzahlsensor 34 die Drehzahl nunmehr an dem Außenverzahnungsabschnitt 27 ab, da die Schaltmuffe 20 in die zweite Kopplungsstellung nach links verschoben ist. In der zweiten Kopplungsstellung erstreckt sich der sensorseitige Abschnitt 37 des Sensorarmes 35 wiederum durch die Schaltgabelöffnung 33, wobei es wiederum der seitlichen Versetzung des sensorseitigen Abschnitts 37 des Sensorarmes 35 zu verdanken ist, dass es zu keinerlei Kollision zwischen der Schaltgabel 35 und dem Sensorarm 35 kommt.

Die Ausgestaltung des Drehzahlsensors 34, die Breite der umlaufenden Nut 25 und die Breite der Außenverzahnungsabschnitte 26, 27 sind bei dem vorliegenden Beispiel demzufolge derart aufeinander abgestimmt, dass die Drehzahl in der Neutralstellung (Fig. 2), der ersten Kopplungsstellung (Fig. 4) und der zweiten Kopplungsstellung (Fig. 5) stets durch den Drehzahlsensor 34 an der Außenverzahnung 24 abgreifbar ist. Hierbei sollte vorzugsweise darauf geachtet werden, dass die Mittenachse des Drehzahlsensors 34, die in den Figuren mit dem Bezugszeichen 38 gekennzeichnet ist, in jeder der genannten Stellungen auf die Außenverzahnung 24 gerichtet ist.

### Bezugszeichen

- 1: Getriebe
- 2: Antriebswelle
- 3: Hauptwelle
- 4: Abtriebswelle
- 5: Achse
- 6: Planetenradgetriebe
- 7: Vorgelegewelle
- 8: Vorgelegewelle
- 9: Achse
- 10: Achse
- 11: Antriebszahnrad
- 12: Antriebszahnrad
- 13: Abtriebszahnrad
- 14: Festzahnrad
- 15: Festzahnrad
- 16: Loszahnrad
- 17: Loszahnrad
- 18: Getriebegehäuse
- 19: Kopplungseinrichtung
- 20: Schaltmuffe
- 21: Muffenträger
- 22: Innenverzahnung
- 23: Innenverzahnung
- 24: Außenverzahnung
- 25: Umlaufende Nut
- 26: Außenverzahnungsabschnitt
- 27: Außenverzahnungsabschnitt
- 28: Schaltgabel
- 29: Strebe
- 30: Strebe
- 31: Schiene
- 32: Stellerraum
- 33: Schaltgabelöffnung
- 34: Drehzahlsensor
- 35: Sensorarm
- 36: Befestigungsabschnitt des Sensorarmes
- 37: Sensorseitiger Abschnitt des Sensorarmes
- 38: Radsatzdrehzahlsensor
- 39: Mittenachse des Drehzahlsensors

## Patentansprüche

1. Anordnung zur Ermittlung der Drehzahl einer Getriebewelle (3) aufweisend eine Getriebewelle (3), einen drehfest mit der Getriebewelle (3) verbundenen Drehzahlgeber und einen feststehenden Drehzahlsensor (34), mittels dessen die Drehzahl an dem Drehzahlgeber abgreifbar ist, **dadurch gekennzeichnet, dass** der Drehzahlgeber am Umfang einer axial verschiebbar und drehfest an der Getriebewelle (3) angeordneten Schaltmuffe (20) einer Kopplungseinrichtung (19) vorgesehen ist.

2. Anordnung nach Anspruch 1, **dadurch gekennzeichnet, dass** der Drehzahlsensor (34) derart ausgerichtet ist, dass die Drehzahl in radialer Richtung an dem Drehzahlgeber abgreifbar ist.

3. Anordnung nach einem der Ansprüche 1 oder 2, **dadurch gekennzeichnet, dass** die Schaltmuffe (20) eine Außenverzahnung (24) aufweist, die mit einer Innenverzahnung (22, 23) eines anzukoppelnden Getriebeteiles (16, 17) in Eingriff bringbar ist, wobei der Drehzahlgeber von der Außenverzahnung (24) gebildet ist.

4. Anordnung nach Anspruch 3, **dadurch gekennzeichnet, dass** die Schaltmuffe (20) von einer Neutralstellung in eine erste Kopplungsstellung verschiebbar ist, in der die Außenverzahnung (24) mit der Innenverzahnung (22, 23) eines ersten anzukoppelnden Getriebeteiles (16, 17) im Eingriff ist.

5. Anordnung nach Anspruch 4, **dadurch gekennzeichnet, dass** die Schaltmuffe (20) ferner von der Neutralstellung in entgegengesetzter Richtung in eine zweite Kopplungsstellung verschiebbar ist, in der die Außenverzahnung (24) mit der Innenverzahnung (23; 22) eines zweiten anzukoppelnden Getriebeteiles (17; 16) im Eingriff ist.

6. Anordnung nach einem der Ansprüche 4 oder 5, **dadurch gekennzeichnet, dass** der Drehzahlsensor (34) derart angeordnet ist, dass die Drehzahl in der Neutralstellung, der ersten Kopplungsstellung und der zweiten Kopplungsstellung an der Außenverzahnung (24) abgreifbar ist.

7. Anordnung nach einem der vorangehenden Ansprüche, **dadurch gekennzeichnet, dass** eine Schaltgabel (28) zum Verschieben der Schaltmuffe (20) vorgesehen ist.

8. Anordnung nach Anspruch 7, **dadurch gekennzeichnet, dass** eine umlaufende Nut (25) in der Schaltmuffe (20) vorgesehen ist, in die die Schaltgabel (28) eingreift, wobei die Außenverzahnung (24) zwei seitliche Außenverzahnungsabschnitte (26, 27) aufweist, zwischen denen sich die umlaufende Nut (25) erstreckt, und die Drehzahl in der Neutralstellung und der ersten Kopplungsstellung an dem einen Außenverzahnungsabschnitt (26; 27) und in der zweiten Kopplungsstellung an dem anderen Au ßenverzahnungsabschnitt (27; 26) abgreifbar ist.

9. Anordnung nach einem der vorangehenden Ansprüche, **dadurch gekennzeichnet, dass** der Drehzahlsensor (34) endseitig an einem Sensorarm (35) befestigt ist, der sich bis zu der Schaltmuffe erstreckt.

10. Anordnung nach Anspruch 9, **dadurch gekennzeichnet, dass** der Sensorarm (35) an einem Getriebegehäuse (18) befestigt ist und sich durch den Stellerraum (32) erstreckt.

11. Anordnung nach einem der Ansprüche 9 oder 10, **dadurch gekennzeichnet, dass** ein sensorseitiger Abschnitt (37) des Sensorarmes (35) derart ausgebildet ist, dass sich dieser in der Neutralstellung, der ersten Kopplungsstellung und/oder der zweiten Kopplungsstellung kollisionsfrei in oder durch die Schaltgabelöffnung (33) erstreckt.

12. Anordnung nach Anspruch 11, **dadurch gekennzeichnet, dass** der sensorseitige Abschnitt (37) des Sensorarmes (35) der Schaltgabelöffnung (33) gegenüberliegend und in Richtung der Schaltgabelöffnung (33) versetzt angeordnet ist.

13. Anordnung nach einem der Ansprüche 9 bis 12, **dadurch gekennzeichnet, dass** an der Getriebewelle (3) ein Loszahnrad (16) vorgesehen ist, das über die Kopplungseinrichtung (19) mit der Getriebewelle (3) koppelbar ist, wobei an dem Sensorarm (35) ferner ein Radsatzdrehzahlsensor (38) vorgesehen ist, mittels dessen die Drehzahl des Loszahnrades (16) an der Verzahnung desselben abgreifbar ist.

14. Anordnung nach einem der Ansprüche 3 bis 13, **dadurch gekennzeichnet, dass** das anzukoppelnde Getriebeteil (16, 17) ein Loszahnrad auf der Getriebewelle (3) oder ein Festzahnrad an einer anderen Getriebewelle ist.

15. Getriebe für ein Kraftfahrzeug aufweisend die Anordnung nach einem der vorangehenden Ansprüche.

16. Getriebe nach Anspruch 15, **dadurch gekennzeichnet, dass** die Getriebewelle (3) die Hauptwelle des Getriebes (1) ist, wobei ferner zwei Vorgelegewellen (7, 8) vorgesehen sind, zwischen denen die Hauptwelle schwimmend gelagert ist.

17. Verfahren zur Ermittlung der Drehzahl einer Getriebewelle mit den Verfahrensschritten:
- Bereitstellen eines Getriebes mit einer Getriebewelle und einer Kopplungseinrichtung, die eine axial verschiebbare und drehfest mit der Getriebewelle verbundene Schaltmuffe aufweist und
- Abgreifen der Drehzahl an dem Umfang der Schaltmuffe.

## Claims

1. Arrangement for determining the rotational speed of a transmission shaft (3), having a transmission shaft (3), a rotational-speed transducer connected in a rotationally fixed manner to the transmission shaft (3), and a stationary rotational-speed sensor (34), by means of which the rotational speed can be picked off on the rotational-speed transducer, **characterized in that** the rotational-speed transducer is provided on the circumference of a shift sleeve (20) of a coupling device (19), which shift sleeve is arranged axially displaceably and in a rotationally fixed manner on the transmission shaft (3).

2. Arrangement according to Claim 1, **characterized in that** the rotational-speed sensor (34) is oriented in such a way that the rotational speed can be picked off on the rotational-speed transducer in a radial direction.

3. Arrangement according to either one of Claims 1 and 2, **characterized in that** the shift sleeve (20) has an external toothing (24) which can be brought into engagement with an internal toothing (22, 23) of a transmission part (16, 17) to be coupled, the rotational-speed transducer being formed by the external toothing (24).

4. Arrangement according to Claim 3, **characterized in that** the shift sleeve (20) is displaceable from a neutral position into a first coupling position, in which the external toothing (24) is in engagement with the internal toothing (22, 23) of a first transmission part (16, 17) to be coupled.

5. Arrangement according to Claim 4, **characterized in that** the shift sleeve (20) is displaceable, furthermore, from the neutral position in the opposite direction into a second coupling position in which the external toothing (24) is in engagement with the internal toothing (23; 22) of a second transmission part (17; 16) to be coupled.

6. Arrangement according to either one of Claims 4 and 5, **characterized in that** the rotational-speed sensor (34) is arranged in such a way that the rotational speed can be picked off on the external toothing (24) in the neutral position, in the first coupling position and in the second coupling position.

7. Arrangement according to one of the preceding claims, **characterized in that** a shift fork (28) is provided for displacing the shift sleeve (20).

8. Arrangement according to Claim 7, **characterized in that** a peripheral groove (25) is provided in the shift sleeve (20), the shift fork (28) engaging into the said groove, the external toothing (24) having two lateral external-toothing portions (26, 27), between which the peripheral groove (25) extends, and the rotational speed being capable of being picked off on one external-toothing portion (26; 27) in the neutral position and in the first coupling position and on the other external-toothing portion (27; 26) in the second coupling position.

9. Arrangement according to one of the preceding claims, **characterized in that** the rotational-speed sensor (34) is fastened on the end face to a sensor arm (35) which extends as far as the shift sleeve.

10. Arrangement according to Claim 9, **characterized in that** the sensor arm (35) is fastened to a transmission casing (18) and extends through the actuator space (32).

11. Arrangement according to either one of Claims 9 and 10, **characterized in that** a sensor-side portion (37) of the sensor arm (35) is designed in such a way that the latter extends, free of collision, into or through the shift-fork orifice (33) in the neutral position, in the first coupling position and/or in the second coupling position.

12. Arrangement according to Claim 11, **characterized in that** the sensor-side portion (37) of the sensor arm (35) is arranged opposite the shift-fork orifice (33) and so as to be offset in the direction of the shift-fork orifice (33).

13. Arrangement according to one of Claims 9 to 12, **characterized in that** a loose gearwheel (16) is provided on the transmission shaft (3) and can be coupled to the transmission shaft (3) via the coupling device (19), there being provided, furthermore, on the sensor arm (35) a wheel-set rotational-speed sensor (38), by means of which the rotational speed of the loose gearwheel (16) can be picked off on the toothing of the latter.

14. Arrangement according to one Claims 3 to 13, **characterized in that** the transmission part (16, 17) to be coupled is a loose gearwheel on the transmission shaft (3) on a fixed gearwheel on another transmission shaft.

15. Transmission for a motor vehicle, having the arrangement according to one of the preceding claims.

16. Transmission according to Claim 15, **characterized in that** the transmission shaft (3) is the main shaft of the transmission (1), furthermore two countershafts (7, 8) being provided, between which the main shaft is mounted floatingly.

17. Method for determining the rotational speed of a transmission shaft, having the method steps:
- provision of a transmission with a transmission shaft and with a coupling device which has an axially displaceable shift sleeve connected in a rotationally fixed manner to the transmission shaft, and
- picking-off of the rotational speed on the circumference of the shift sleeve.

## Revendications

1. Agencement pour déterminer la vitesse de rotation d'un arbre de boîte de vitesses (3) présentant un arbre de boîte de vitesses (3), un générateur de vitesse de rotation connecté de manière solidaire en rotation à l'arbre de boîte de vitesses (3), et un capteur de vitesse de rotation (34) fixe, au moyen duquel la vitesse de rotation peut être obtenue sur le générateur de vitesse de rotation, **caractérisé en ce que** le générateur de vitesse de rotation est prévu sur la périphérie d'un manchon de changement de vitesse (20) d'un dispositif d'accouplement (19) disposé de manière déplaçable axialement et solidaire en rotation sur l'arbre de boîte de vitesses (3).

2. Agencement selon la revendication 1, **caractérisé en ce que** le capteur de vitesse de rotation (34) est prévu de telle sorte que la vitesse de rotation puisse être obtenue dans la direction radiale sur le générateur de vitesse de rotation.

3. Agencement selon l'une quelconque des revendications 1 ou 2, **caractérisé en ce que** le manchon de changement de vitesse (20) présente une denture extérieure (24) qui peut être amenée en prise avec une denture intérieure (22, 23) d'une partie à accoupler de la boîte de vitesses (16, 17), le générateur de vitesse de rotation étant formé par la denture extérieure (24).

4. Agencement selon la revendication 3, **caractérisé en ce que** le manchon de changement de vitesse (20) peut être déplacé d'une position neutre dans une première position d'accouplement dans laquelle la denture extérieure (24) est en prise avec la denture intérieure (22, 23) d'une première partie à accoupler de la boîte de vitesses (16, 17).

5. Agencement selon la revendication 4, **caractérisé en ce que** le manchon de changement de vitesse (20) peut en outre être déplacé de la position neutre dans la direction opposée dans une deuxième position d'accouplement, dans laquelle la denture extérieure (24) est en prise avec la denture intérieure (23 ; 22) d'une deuxième partie à accoupler de la boîte de vitesses (17 ; 16).

6. Agencement selon l'une quelconque des revendications 4 ou 5, **caractérisé en ce que** le capteur de vitesse de rotation (34) est disposé de telle sorte que la vitesse de rotation puisse être obtenue dans la position neutre, la première position d'accouplement et la deuxième position d'accouplement sur la denture extérieure (24).

7. Agencement selon l'une quelconque des revendications précédentes, **caractérisé en ce qu'**il est prévu une fourchette de sélection (28) pour déplacer le manchon de changement de vitesse (20).

8. Agencement selon la revendication 7, **caractérisé en ce qu'**il est prévu une rainure périphérique (25) dans le manchon de changement de vitesse (20), dans laquelle vient en prise la fourchette de sélection (28), la denture extérieure (24) présentant deux portions de denture extérieure latérales (26, 27), entre lesquelles s'étend la rainure périphérique (25), et la vitesse de rotation peut être obtenue dans la position neutre et la première position d'accouplement au niveau d'une des portions de denture extérieure (26 ; 27) et dans la deuxième position d'accouplement au niveau de l'autre portion de denture extérieure (27 ; 26).

9. Agencement selon l'une quelconque des revendications précédentes, **caractérisé en ce que** le capteur de vitesse de rotation (34) est fixé à une extrémité à un bras de capteur (35), qui s'étend jusqu'au manchon de changement de vitesse.

10. Agencement selon la revendication 9, **caractérisé en ce que** le bras de capteur (35) est fixé sur un carter de boîte de vitesses (18) et s'étend à travers l'espace de commande (32).

11. Agencement selon l'une quelconque des revendications 9 ou 10, **caractérisé en ce qu'**une portion du côté du capteur (37) du bras de capteur (35) est réalisée de telle sorte qu'elle s'étende dans la position neutre, dans la première position d'accouplement et/ou dans la deuxième position d'accouplement sans collision dans ou à travers l'ouverture de la fourchette de sélection (33).

12. Agencement selon la revendication 11, **caractérisé en ce que** la portion du côté du capteur (37) du bras de capteur (35) est disposée en face de l'ouverture de la fourchette de sélection (33) et de manière décalée dans la direction de l'ouverture de la fourchette de sélection (33).

13. Agencement selon l'une quelconque des revendications 9 à 12, **caractérisé en ce qu'**une roue dentée libre (16) est prévue sur l'arbre de boîte de vitesses (3), laquelle peut être accouplée par le biais du dispositif d'accouplement (19) à l'arbre de boîte de vitesses (3), un capteur de vitesse de rotation du train de roue (38) étant en outre prévu sur le bras de capteur (35), au moyen duquel la vitesse de rotation de la roue dentée libre (16) sur sa denture peut être obtenue.

14. Agencement selon l'une quelconque des revendications 3 à 13, **caractérisé en ce que** la partie à accoupler de la boîte de vitesses (16, 17) est une roue dentée libre sur l'arbre de boîte de vitesses (3) ou une roue dentée fixe sur un autre arbre de boîte de vitesses.

15. Boîte de vitesses pour un véhicule automobile présentant l'agencement selon l'une quelconque des revendications précédentes.

16. Boîte de vitesses selon la revendication 15, **caractérisée en ce que** l'arbre de boîte de vitesses (3) est l'arbre principal de la boîte de vitesses (1), deux arbres intermédiaires (7, 8) étant en outre prévus, entre lesquels l'arbre principal est monté flottant.

17. Procédé pour déterminer la vitesse de rotation d'un arbre de boîte de vitesses, comprenant les étapes de procédé suivantes :
- fourniture d'une boîte de vitesses avec un arbre de boîte de vitesses et un dispositif d'accouplement, qui présente un manchon de changement de vitesse déplaçable axialement et connecté de manière solidaire en rotation à l'arbre de boîte de vitesses, et
- obtention de la vitesse de rotation à la périphérie du manchon de sélection.
